## Europäisches Patentamt

(19) **European Patent Office**

**Office européen des brevets**

(11) Veröffentlichungsnummer : **0 181 590**
**B1**

(12) **EUROPÄISCHE PATENTSCHRIFT**

(45) Veröffentlichungstag der Patentschrift :
07.03.90

(51) Int. Cl.$^5$ : **B 29 C 45/38**

(21) Anmeldenummer : **85114032.7**

(22) Anmeldetag : **05.11.85**

(54) Verfahren und Vorrichtung zum Ausstanzen und Entfernen des Angussteils bei einem Spritzgiesswerkzeug.

(30) Priorität : 16.11.84 DE 3442023

(43) Veröffentlichungstag der Anmeldung :
21.05.86 Patentblatt 86/21

(45) Bekanntmachung des Hinweises auf die Patenterteilung : 07.03.90 Patentblatt 90/10

(84) Benannte Vertragsstaaten :
AT BE CH FR GB IT LI NL SE

(56) Entgegenhaltungen :
EP--A-- 0 051 253
CH--A-- 453 671
DE--A-- 3 135 258
FR--A-- 2 109 327
US--A-- 3 112 523
US--A-- 4 185 955

(73) Patentinhaber : **Krauss-Maffei Aktiengesellschaft**
**Krauss-Maffei-Strasse 2**
**D-8000 München 50 (DE)**

(72) Erfinder : **Ehrler, Ernst**
**Josef-Führer-Strasse 50**
**D-8000 München 50 (DE)**
Erfinder : **Eichlseder, Martin**
**Ottenberg 54**
**D-8399 Tettenweis (DE)**
Erfinder : **Theiss, Edmund**
**Aribostrasse 42**
**D-8050 Freising (DE)**

Jouve, 18, rue St-Denis, 75001 Paris, France

**Beschreibung**

Die Erfindung bezieht sich auf ein Verfahren und eine Vorrichtung zum Ausstanzen und Entfernen des Angußteils bei einem im wesentlichen zweiteiligen Spritzgießwerkzeug gemäß dem Oberbegriff des Anspruchs 1.

Der Angußhohlraum dient dabei aufgrund seiner speziellen Formgebung dazu, den aus dem Kanal der Maschinendüse senkrecht zum Formhohlraum auftreffenden verflüssigten Kunststoff, gleichmäßig über den Umfang verteilt, um 90 Grad um- und in den Formhohlraum zur Herstellung eines möglichst spannungsarmen Formprodukts einzuleiten. Das beim Spritzvorgang im Angußhohlraum gebildete Angußteil muß nach der Abkühlphase aus dem Formprodukt herausgetrennt und entfernt werden.

Aus der CH-A-453 671 ist ein Verfahren zum Ausstanzen und Entfernen eines Angußteils bei einem im wesentlichen zweiteiligen Spritzgießwerkzeug bekannt, dessen beide Teile in einer Achsrichtung beweglich zueinander angeordnet sind, zum Spritzen von thermoplastischem Kunststoff in einen Formhohlraum, insbesondere zum Herstellen von Informationsträgerscheiben, wobei das Ausstanzen des Angußteils axial erfolgt und wobei das Angußteil in einen als Matrize dienenden Teil des Spritzgießwerkzeugs hineingestanzt wird.

Nach der DE-OS 28 38 634 ist es bereits bekannt, bei der Herstellung eines ringförmigen Gußkörpers im Spritzgießverfahren das einstückig mit dem Gußkörper zusammenhängende Angußteil durch Herausstanzen vom Gußkörper abzutrennen und mittels eines Angußauswerfers auszuwerfen. Die Stanz- und Auswerfeinrichtung ist dabei in demjenigen Teil der im wesentlichen zweiteiligen Form angeordnet, welches dem Teil mit der Spritzdüse gegenüberliegt. Die Stanzeinrichtung besteht aus einem ringförmigen Formteil und einem Stanzteil, dessen Endabschnitt mit dem Formteil zusammenwirkend das Angußteil vom ringförmigen Teil abtrennt.

Dieser Vorgang setzt voraus, daß das zweiteilige Spritzgießwerkzeug bzw. die Spritzgießform geöffnet wird, indem die beiden Teile der Form voneinander entfernt werden. Die Trennung der beiden Formteile erfolgt in zwei Schritten, und zwar zunächst nur soweit, daß das in einer Hinterschneidung gehaltene Angußteil in den entstandenen Freiraum mittels des hydraulisch betätigten rohrförmigen Auswerfers hineingestanzt wird, wo es mittels der Hinterschneidung in seiner axialen Lage noch gehalten wird. Sodann wird die Form vollständig geöffnet und das Angußteil durch einen im rohrförmigen Auswerfer geführten Auswerferstift aus der Hinterschneidung ausgestoßen, so daß es in der Trennebene des Spritzgießwerkzeugs nach unten fällt.

Bei beiden vorgenannten bekannten Verfahren bzw. Vorrichtungen muß die Form zum Entfernen des Angußteils geöffnet werden, d. h. die beiden Teile der Form müssen auseinanderbewegt werden.

Bei der Herstellung von Informationsträgerscheiben, z. B. Ton- und Bildträgerscheiben im Spritzgießverfahren werden höchste Ansprüche an Präzision und Staubfreiheit gestellt. Insbesondere sind die Scheiben bei ihrer Entformung äußerst empfindlich gegenüber Beschädigungen und Verunreinigungen. So kann das herunterfallende Angußteil bei geöffneter Form den gespritzten Artikel beschädigen und durch den Stanz- und Auswurfvorgang freiwerdende Staubpartikeln können sich auf ihm ablagern und die Wiedergabequalität der Scheibe beeinträchtigen. Auch in der Form selbst, insbesondere auf der speziell bei diesem Herstellungsverfahren innerhalb des Spritzgießwerkzeugs verwendeten Matrizenplatte kann sich Staub ablagern, der beim folgenden Spritzvorgang in das Produkt eingelagert würde. Eine so hergestellte Trägerscheibe wäre in ihrer Wiedergabequalität stark beeinträchtigt, was bis zur Unbrauchbarkeit der Scheibe führen kann.

Aus der DE-A-31 35 258 ist ferner ein Verfahren zum Herstellen von Guß- und Fließpreßteilen mit Durchbrüchen bekannt, wobei ein scheibenförmiges Gußteil mit einem zentralen Durchbruch versehen wird, indem kurz nach dem Erstarren des Gußwerkstoffes der Werkstoffabfall des Durchbruches ausgestanzt wird. Die Abfallstücke werden durch einen Abführkanal aus dem Formwerkzeug abgeführt. Bei jedem Stanzvorgang wird ein neues Abfallstück in den Abführkanal hineingeschoben. Die Abfallstücke bauen einen gewissen Widerstand beim Ausstanzen des Durchbruches auf. Hierbei handelt es sich jedoch nicht um ein axiales Ausstanzen und Entfernen des Angußteils sondern der Anguß ist seitlich an der Peripherie des scheibenförmigen Gußkörpers angeordnet. Ein seitliches Angießen hat sich jedoch beim Herstellen von Informationsträgerscheiben durch Spritzgießen als ungeeignet erwiesen, da hiermit die geforderte gleichmäßig über den Umfang verteilte Einleitung des verflüssigten Kunststoffes und das Erzeugen eines möglichst spannungsarmen Formprodukts nicht möglich ist.

Der Erfindung liegt die Aufgabe zugrunde, bei einem Spritzgießwerkzeug gemäß dem Oberbegriff des Anspruchs 1 eine Möglichkeit zum Ausstanzen und Entfernen des Angußteils zu schaffen, bei der Beschädigungen des gespritzten Artikels durch das Angußteil selbst und/oder durch Anlagerung von beim Ausstanzen freiwerdenden Staubpartikeln an dem Artikel und an der Form sicher vermieden werden können.

Diese Aufgabe wird gemäß den Merkmalen des Anspruchs 1 gelöst. Die Erfindung ermöglicht eine weitgehende Schonung insbesondere hochempfindlicher Informationsträgerscheiben bei deren Herstellung im Spritzgießverfahren. Das Ausstanzen und Auswerfen des Angußteils erfolgt bei geschlossener Form, d. h. die beiden Teile der Form werden erst dann zum Auswerfen des Formprodukts geöffnet, nachdem das Angußteil zusammen mit den durch das Ausstanzen entstandenen Staubpartikeln entfernt worden ist. Die nach außen führende Öffnung kann zweckmäßig so angeordnet sein, daß das Angußteil und sonstige Verunreinigungen nach unten herausfallen können und diese zusammen mit den Staubpartikeln durch Absaugen besonders gründlich entfernt werden können. Dies ist beim Spritzgießen von Informationsträgerscheiben sehr wichtig, da das Ansetzen von kleinsten Partikeln die Wiedergabequalität wesentlich beeinträchtigen würde.

Mit dem Patentanspruch 2 wird eine geeignete Vorrichtung zur Durchführung des erfindugsgemäßen Verfahrens beansprucht. Hierbei ist der Stanzstempel düsenseitig angeordnet und im gegenüber liegenden Teil des Spritzgießwerkzeugs eine Hülse als Führung für den Auswerfer vorgesehen. Beim Ausstanzen des Angußteils weicht der Auswerfer mit dem Auswerferstift axial zurück und nimmt dabei das Angußteil mit, welches mittels einer oder mehrerer Hinterschneidungen im Auswerfer gehalten ist. Der Auswerfer wird nun in gleicher Richtung soweit zurückgezogen, bis sich das Angußteil im Bereich der Öffnung befindet und durch den Auswerferstift aus dem Auswerfer ausgestoßen wird. Zusammen mit dem beim Ausstanzen entstandenen Staub kann das Angußteil nun durch die Öffnung entfernt werden.

Eine vorteilhafte Ausführungsform ergibt sich nach Anspruch 3, wonach der Stanzstempel den Düsenkörper hülsenartig umgibt und der Düsenkörper innerhalb des Spritzgießwerkzeugs und gegenüber dem Stanzstempel axial beweglich angeordnet ist. Diese Ausführungsform ermöglicht es, daß nach dem Einspritzvorgang der Düsenkörper mit der Düsenspitze zurückgezogen wird und dadurch eine thermische Trennung zwischen Düsenkörper und Stanzstempel erfolgt. Auf diese Weise kann der Stanzstempel und damit auch der Kegel des Angußteils zur besseren Entformung gut abgekühlt werden, während die zurückgezogene Düsenspitze wieder aufgeheizt werden kann und sie dadurch für den folgenden Einspritzvorgang verflüssigtes thermoplastisches Kunststoffmaterial zur Verfügung halten kann. Die axiale Bewegung des Stanzstempels kann im geschlossenen Zustand des Spritzgießwerkzeugs beispielsweise durch eine hydraulisch betätigte keilförmige Gabel bzw. durch einen Schieber erfolgen.

Zur Durchführung des Verfahrens gemäß der Erfindung sind aber auch noch andere geeignete Vorrichtungen denkbar. So kann z. B. die aus dem Spritzgießwerkzeug nach außen führende Öffnung auch im Bereich des Düsenkörpers angeordnet sein. In diesem Falle würde das Ausstanzen des Angußteils durch den Auswerfer erfolgen, wobei der Düsenkörper entsprechend zurückzufahren wäre.

In der Zeichnung ist ein Ausführungsbeispiel der Erfindung dargestellt.

Es zeigen

Fig. 1 einen axialen Ausschnitt eines zweiteiligen Spritzgießwerkzeugs mit einem eingespritzten Formteil,

Fig. 2 den Ausschnitt gemäß Fig. 1 nach dem Ausstanzen des Angußteils,

Fig. 3 den Ausschnitt gemäß Fig. 1 und 2 mit weiter zurückgezogenem Auswerfer und

Fig. 4 das Ausstoßen des Angußteils.

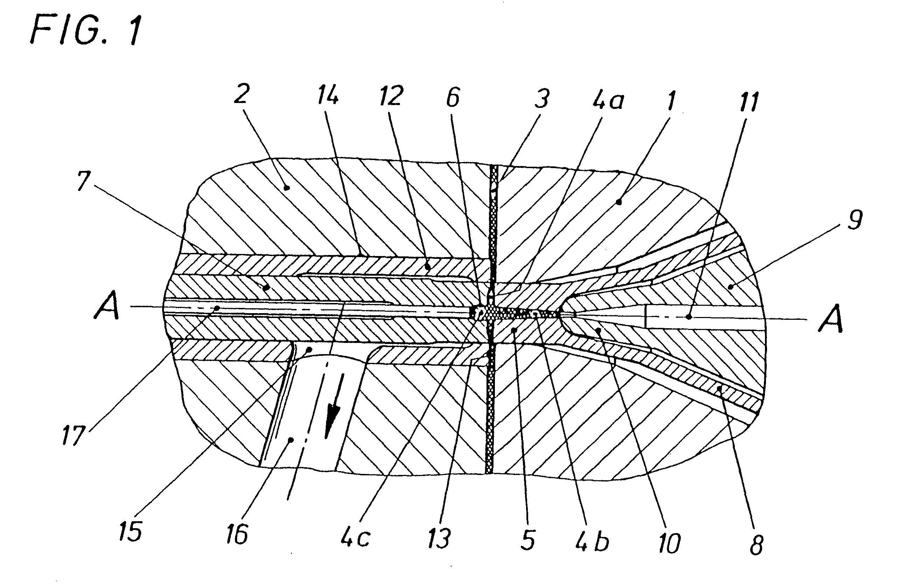

In Fig. 1 ist ausschnittsweise ein Spritzwerkzeug dargestellt, das im wesentlichen aus zwei Teilen 1 und 2 besteht, die in Achsvorrichtung A-A beweglich zueinander angeordnet sind. Zwischen den Teilen 1 und 2 ist ein Hohlraum gebildet, der durch ein Augußteil 4 und ein eingespritztes Formteil 3 ausgefüllt ist.

Durch den Spritzvorgang ist das Angußteil 4 über eine Angußscheibe 4a mit dem Formteil 3 einstückig verbunden. Das Angußteil 4 reicht mit einem Angußkegel 4b in einen Stanzstempel 5 hinein und ist mit einem Zapfen 4c in einer Hinterschneidung 6 eines Auswerfers 7 gehalten. Der Stanzstempel 5 erweitert sich zu einer trichterförmigen Hülse 8, die einen Düsenkörper 9 mit einer Düsenspitze 10 und einem Düsenkanal 11 umgibt. Stanzstempel 5 und Düsenkörper 9 sind unabhängig voneinander axial beweglich innerhalb des Teiles 1 angeordnet.

Der Auswerfer 7 ist ebenfalls axial beweglich in einer Hülse 12 geführt, die an ihrer vorderen Stirnseite 13 als Matrize für den Stanzstempel 5 ausgebildet ist und deren Mantel 14 eine Öffnung 15 aufweist, die in einen Kanal 16 im Teil 2 mündet. Innerhalb des Auswerfers 7 ist ein Auswerferstift 17 axial beweglich geführt.

Beim Spritzvorgang gelangt das verflüssigte Kunststoffmaterial durch den Kanal 11 unter Bildung des Angußkegels 4b und der Angußscheibe 4a sowie des Zapfens 4c in den Hohlraum zwischen den beiden Teilen 1 und 2 des Spritzgießwerkzeugs und bildet hier das Formteil 3.

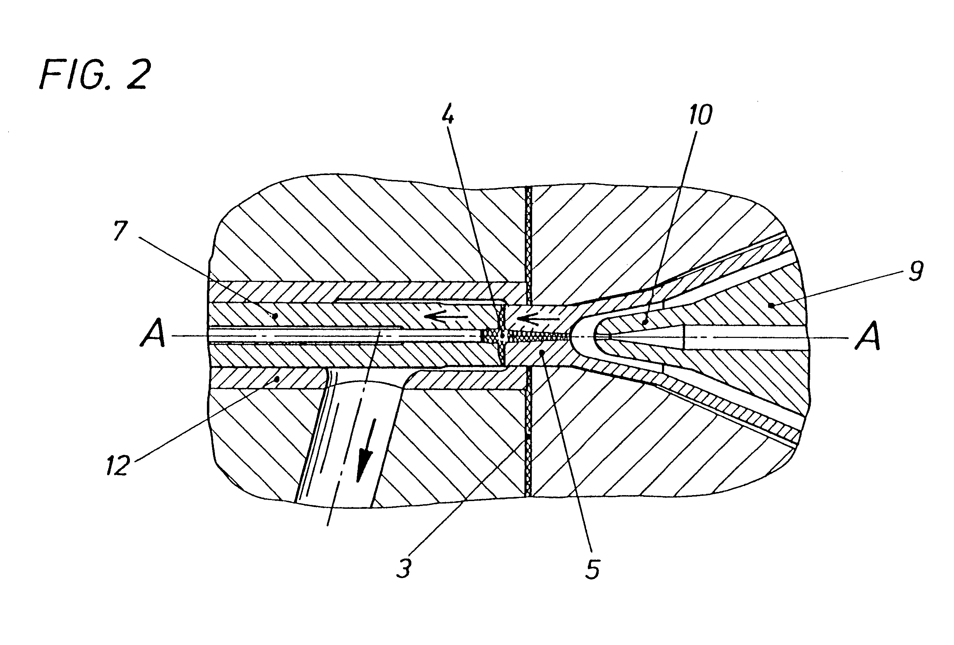

Nach dem Abkühlen und Erhärten des Angußteils 4 und des Formteils 3 erfolgt das Ausstanzen des Angußteils 4 nach Fig. 2. Der auf den Auswerfer 7 ausgeübte hydraulische Druck wird hierzu reduziert, so daß der Auswerfer 7 unter dem Druck des Stanzstempels 5 axial zurückweichen kann.

Der Stanzstempel 5 wird im geschlossenen Zustand des Spritzgießwerkzeugs durch eine nicht dargestellte hydraulisch betätigte keilförmige Gabel bewegt und stanzt die Angußscheibe 4a aus dem Formteil 3 heraus und damit das Angußteil 4 in die als Matrize dienende Hülse 12 hinein.

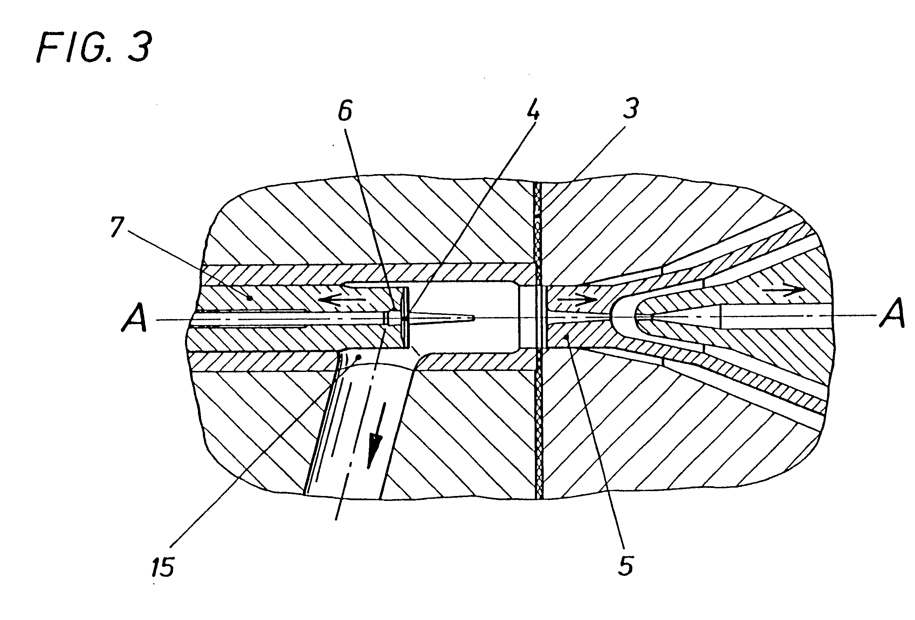

Fig. 3 zeigt den Stanzstempel 5 in zurückgezogener Stellung d. h. in Ausgangsstellung, während der Auswerfer 7 weiterzurückbewegt ist und sich nun mit seinem vorderen Teil im Bereich der Öffnung 15 befindet. Das Angußteil 4 wird dabei mittels der Hinterschneidung 6 im Auswerfer 7 gehalten. Vor dem Zurückziehen des Stanzstempels 5 wird der Düsenkörper 9 mit seiner Düsenspitze 10 zurückgezogen, um hierdurch eine wirksame thermische Trennung zwischen dem Düsenkörper 9 und dem Stanzstempel 5 zu erzielen. Dadurch kann insbesondere der Angußbereich im Stanzstempel und damit der Angußkegel zur besseren Entformung gut abgekühlt werden, während die zurückgezogene Düsenspitze wieder aufgeheizt wird und plastisches Kunststoffmaterial für die nächste Einspritzung zur Verfügung hält.

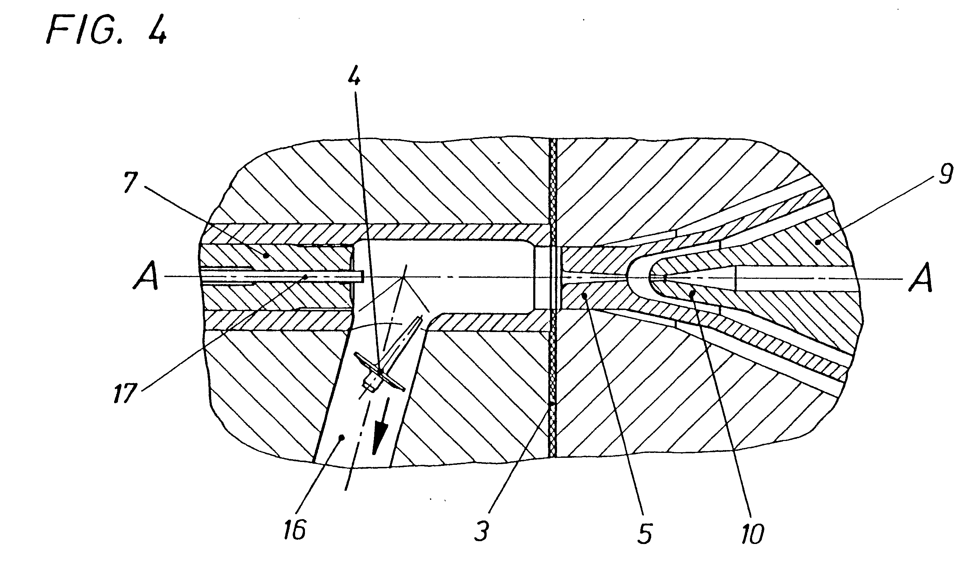

Gemäß Fig. 4 wird nun das Angußteil 4 durch Vorwärtsbewegen des Auswerferstifts 17 ausgestoßen und fällt durch die Öffnung 15 in den Kanal 16, aus dem es zusammen mit den anfallenden Staubpartikeln mittels einer nicht dargestellten Absaugvorrichtung abgesaugt wird.

Im Anschluß hieran werden dann die beiden Teile 1 und 2 des Spritzgießwerkzeugs auseinandergefahren, so daß das hochempfindliche Formteil 3 ohne Gefahr der Beschädigung durch ein herunterfallendes Angußteil und/oder durch Staubanlagerung entnommen werden kann.

## Patentansprüche

1. Verfahren zum Ausstanzen und Entfernen des Angußteils bei einem im wesentlichen zweiteiligen Spritzgießwerkzeug, dessen beide Teile axial beweglich zueinander angeordnet sind, zum Spritzen von thermoplastischem Kunststoff in einen Formhohlraum, insbesondere zum Herstellen von Informationsträgerscheiben, wobei das Ausstanzen des Angußteils axial erfolgt und das Angußteil in einen als Matrize dienenden Teil des Spritzgießwerkzeugs hineingestanzt wird, dadurch gekennzeichnet, daß das Angußteil und die beim Ausstanzen desselben entstandenen Staubpartikel im Anschluß an den Stanzvorgang bei geschlossenem Spritzgießwerkzeug, d. h. ohne Auseinanderbewegen der beiden Werkzeugteile, durch eine aus dem Inneren des als Matrize dienenden Teils des Spritzgießwerkzeugs herausführende Öffnung abgesaugt werden.

2. Zweiteiliges Spritzgießwerkzeug (1, 2) zur Durchführung des Verfahrens nach Anspruch 1, mit einer in Formöffnungsrichtung axial verschiebbar angeordneten Spritzdüse (9, 10, 11) und einem in Achsrichtung der Spritzdüse (9, 10, 11) in einem ringförmigen Teil verschiebbar geführten, rohrförmigen Auswerfer (7) zum Ausstanzen und Entfernen eines zwischen Spritzdüse (9, 10, 11) und Auswerfer (7) befindlichen Angußteils (4) sowie mit einem in einer zentralen Bohrung im rohrförmigen Auswerfer (7) verschiebbar geführten Auswerferstift (17) und einer ringförmigen Hinterschneidung (6) in der Bohrung des Auswerfers (7) zum Halten des ausgestanzten Angußteils (4), dadurch gekennzeichnet, daß die Spritzdüse (9, 10, 11) als axial verschiebbarer Stanzstempel (5) ausgebildet ist und daß das den rohrförmigen Auswerfer (7) umgebende ringförmige Teil in Form einer Hülse (12) an ihrer dem Stanzstempel (5) zugewandten Stirnseite (13) als Matrize für den Stanzstempel (5) ausgebildet ist und die Hülse (12) eine Öffnung (15) für einen Durchtritt und ein Absaugen des Angußteils (4) und der Staubpartikel aufweist.

3. Spritzgießwerkzeug nach Anspruch 2, dadurch gekennzeichnet, daß der Stanzstempel (5) an seinem Frontteil mit einer sich nach hinten kegelförmig verengenden Bohrung zur Aufnahme des Angußkegels (4b) und zur Einleitung eines Düsenkanals (11) versehen ist und anschließend einen Düsenkörper (9) in Form einer nach hinten trichterförmig erweiterten Hülse (8) umgibt und daß der Düsenkörper (9) innerhalb des Spritzgießwerkzeugs und gegenüber dem Stanzstempel (5) axial beweglich angeordnet ist.

4. Spritzgießwerkzeug nach Anspruch 2 und 3, dadurch gekennzeichnet, daß die Öffnung (15) der den rohrförmigen Auswerfer (7) umgebenden Hülse (12) mit einer Absaugvorrichtung versehen ist.

## Claims

1. A method of stamping out and removing the sprue part in a substantially two-part injection moulding tool, the two parts of which are disposed to be axially movable in respect of each other, for the injection of thermoplastics material in a mould cavity, particularly for producing data carrier discs, the stamping out of the sprue part occurring axially, the sprue part being stamped into a part of the injection moulding tool which serves as a female die part, characterised in that the sprue part and the dust particles occurring when the same is stamped out being, following on from the stamping process and while the injection moulding tool is closed, i. e. without any movement of the two tool parts away from each other, extracted through an orifice leading out of the interior of that part of the injection moulding tool which serves as a female die part.

2. A two-part injection moulding tool (1, 2) for carrying out the method according to Claim 1, with an injector (9, 10, 11) disposed for axial displacement in the direction of the mould opening and, guided for displacement in the axial direction of the injector (9, 10, 11), in an annular part, a tubular ejector (7) for stamping out and removing a sprue part (4) disposed between the injector (9, 10, 11) and ejector (7) and with an injector rod (17) guided for displacement in a central bore in the tubular ejector (7) and with an annular undercut (6) in the bore of the ejector (7) for retaining the stamped-out sprue part (4), characterised in that the injector (9, 10, 11) is constructed as an axially displaceable stamping die (5) and in that the annular part surrounding the tubular ejector (7) is constructed in the form of a sleeve (12) on its end face (13) which is towards the stamping die (5) to serve as a female part for the stamping die (5), the sleeve (12).

3. A injection moulding tool according to Claim 2, characterised in that the stamping die (5) has on its front part a rearwardly conically narrowing bore to accommodate the sprue cone (4b) and for the introduction of a die approach (11) and subsequently enclosing an injector body (9) in the form of a rearwardly funnel-shaped widening out sleeve (8) and in that the injector body (9) is disposed within the injection moulding tool and is adapted for axial movement in respect of the stamping die (5).

4. An injection moulding tool according to Claim 2 and 3, characterised in that the opening (15) in the sleeve (12) which surrounds the tubular ejector (7) is provided with a vacuum extraction device.

## Revendications

1. Procédé de découpage par poinçonnage et d'enlèvement de la carotte d'injection dans un outillage, essentiellement en deux parties, de moulage par injection, ces deux parties étant mobiles axialement l'une par rapport à l'autre, pour injecter une matière thermoplastique dans la cavité d'un moule, notamment pour fabriquer des disques porteurs d'information, le découpage de la carotte étant effectué axialement et cette carotte étant repoussée dans un élément de l'outillage servant de matrice, procédé caractérisé en ce que la carotte d'injection et les particules de poussière produites pendant son découpage sont aspirées après ce découpage, alors que l'outillage de moulage est fermé, c'est-à-dire sans écartement des deux parties de cet outillage, l'aspiration étant effectuée par une ouverture menant vers l'extérieur depuis l'intérieur de l'élément dudit outillage qui sert de matrice.

2. Outillage de moulage par injection en deux parties (1, 2) pour la mise en œuvre du procédé selon la revendication 1, comportant une filière (9, 10, 11) d'injection, mobile axialement dans le sens d'ouverture de l'outillage, un éjecteur (7) tubulaire qui peut coulisser dans le sens de l'axe de cette filière (9, 10, 11) dans un élément annulaire et est destiné à découper et retirer une carotte (4) d'injection qui se trouve entre ladite filière (9, 10, 11) et cet éjecteur (7), ainsi qu'une tige (17) d'éjection, qui peut coulisser dans l'alésage central dudit éjecteur (7) tubulaire et, dans cet alésage de l'éjecteur (7) tubulaire, un chambrage annulaire (6) destiné à retenir la carotte (4) d'injection sectionnée, outillage caractérisé en ce que la filière (9, 10, 11) d'injection a la conformation d'un poinçon (5) de découpage, mobile axialement, et en ce que l'élément annulaire qui entoure l'éjecteur (7) tubulaire a la conformation d'une douille (12), dont la face d'extrémité (13), tournée vers ce poinçon (5) a la conformation d'une matrice pour ledit poinçon (5), cette douille (12) comportant une ouverture (15) destinée à laisser passer et à aspirer la carotte (4) d'éjection, et les particules de poussière.

3. Outillage de moulage par injection selon la revendication 2, caractérisé en ce que le poinçon (5) présente à sa partie antérieure un perçage qui se rétrécit en cône vers l'arrière, destiné à loger le cône (4b) de la carotte d'injection et à former le début d'un canal (11) de filière, puis entoure un corps de filière (9) en formant un manchon (8) s'évasant en entonnoir vers l'arrière, et en ce que ce corps de filière (9) est mobile axialement par rapport au poinçon (5) à l'intérieur de l'outillage d'injection.

4. Outillage de moulage par injection selon les revendications 2 et 3, caractérisé en ce que l'ouverture (15) de la douille (12), qui entoure l'éjecteur (7) tubulaire, est pourvue d'un dispositif d'aspiration.

# FIG. 1

EP 0 181 590 B1

FIG. 2

FIG. 3

FIG. 4

EP 0 181 590 B1